Europäisches Patentamt

**European Patent Office**

**Office européen des brevets**

(11) Publication number: **0 278 156**
**A1**

# EUROPEAN PATENT APPLICATION

(21) Application number: **87309412.2**

(22) Date of filing: **23.10.87**

(51) Int. Cl.⁴: **G01B 3/16**

(30) Priority: **25.10.86 GB 8625567**

(43) Date of publication of application:
**17.08.88 Bulletin 88/33**

(84) Designated Contracting States:
**AT CH DE FR IT LI NL**

(71) Applicant: **Farrow, John Reginald**
**14, Stow Park Circle**
**Newport Gwent.(GB)**

(72) Inventor: **Farrow, John Reginald**
**14, Stow Park Circle**
**Newport Gwent.(GB)**

(74) Representative: **Lainé, Simon James et al**
**Wynne-Jones, Lainé & James Morgan**
**Arcade Chambers 33, St.Mary Street**
**Cardiff CF1 2AB(GB)**

(54) **Improvements relating to calipers.**

(57) Calipers have mutually pivoted legs (1,2) biased apart by a spring (3), and with a tip spacing adjustable by a nut assembly (6,9; 11,16) on a screw-threaded shaft (4) spanning the legs. This shaft may be pivoted on one leg (1) and be engageable in a detent (8) in an abutment (7) on the other leg (2) with which the nut assembly (6,9) co-operates to set the calipers in the gauging position. The shaft (4) may then be pivoted clear to release the legs, without disturbing the nut assembly, and subsequently restored to the exact gauging position. Alternatively the shaft (4) passes through an abutment (10) and the gauging position is set by a quick-release nut assembly (11) acting against one side of that abutment. On the other side, a nut (16) is then moved into contact before the nut assembly (11) is released. The legs can be subsequently restored to the exact gauging position by bringing the abutment (10) back into contact with the undisturbed nut (16). These principles are applicable to inside as well as outside calipers.

FIG. 3.

## "Improvements relating to Calipers"

This invention relates to calipers.

Calipers are used to measure the thickness of an object (outside calipers) or the distance between two objects (inside calipers). Two mutually hinged legs are adjusted until the tips contact the surfaces in question, the instrument is removed, and the distance between the tips, measured against a rule or other scale, gives the dimension sought. This technique depends on the legs not being disturbed while being transferred between workpiece and rule.

However, there are many occasions where this is not possible, for example measuring the thickness of the web of an I-section column where the calipers cannot be freed at either end, or determining the thickness of glass in a frame. There are sophisticated, delicate and expensive instruments for meeting these problems, but there is a need for a simple, robust and relatively cheap one which a workman could be expected to have in his tool bag.

One approach would be to put a scale on an 'ordinary' pair of calipers by which the thickness could be directly read out, or which would guide the user to re-set the legs after adjustment to free them from the workpiece, whereupon the tips could be placed against a rule. However, direct read-out would fail if the legs became distorted (as they could easily do in day-to-day use, thrown in with other tools) and the second method would be too laborious and uncertain.

According to the present invention there is provided calipers with mutually pivoted legs whose tip spacing is adjustable by screw means comprising a threaded shaft mounted on one leg and nut means on the shaft co-operating with an abutment on the other leg, the nut means being releasable from the abutment to allow the legs to be freed after gauging a workpiece while leaving at least part thereof in a set position on the shaft, and the legs being subsequently resettable into the gauging position by restoring co-operation between said part and the abutment.

In one form the shaft is pivoted on said one leg and the abutment provides a detent for receiving the shaft from which the latter can be freed, without disturbance of the nut means, by pivoting. This pivot axis will preferably be generally parallel to the axis about which the legs mutually pivot. Although a single nut might suffice, it will be best to have a main abutment-co-operating nut and a lock nut therefor.

With this arrangement, assuming they are outside calipers with a spring urging the legs apart, when the threaded shaft is pivoted clear, the legs spread and the calipers can be freed from the workpiece. Then they can be squeezed together again and the shaft reinstated in the detent with the nut or nuts in the original undisturbed position. It is then a straight-forward matter of applying the tips to a rule and reading off the spacing.

In another form, the nut means comprise a first, abutment-co-operating nut on one side of the abutment, and constituting said one part of the nut means left in a set position, and a second, adjustment nut on the other side of the abutment which acts to close the abutment towards the first nut. Preferably, this second nut is a quick release nut assembly enabling it to be slid along the shaft without rotation. It is only turned for the final, fine adjustment.

With this arrangement, and with the workpiece being gauged and the legs held by the second nut, the first nut is turned to contact the abutment. Then the second nut is released, allowing the legs to spring apart and the calipers to be freed from the workpiece. This again assumes outside calipers with a spring. The legs can then be squeezed together again and the second nut tightened to urge the abutment against the undisturbed first nut. The tips are then back to the spacing at which they were gauging the workpiece, and can be set against a rule for that dimension to be read off.

For a better understanding of the invention some embodiments will now be described, by way of example, with reference to the accompanying drawings, in which:

Figure 1 is a side view of outside calipers,

Figure 2 is a section, to an enlarged scale, on the line II-II of Figure 1, and

Figure 3 is a side view of another form of outside calipers.

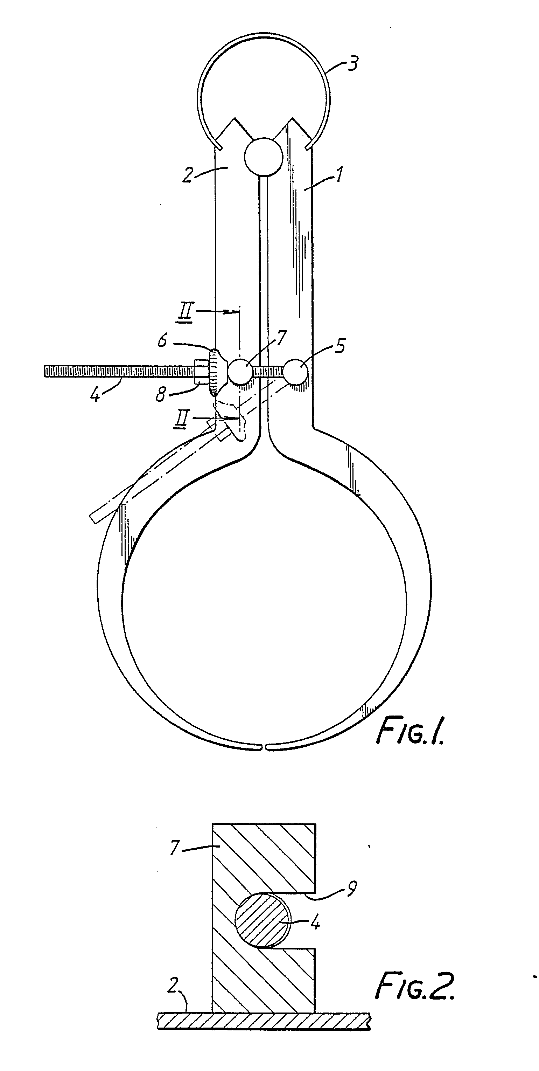

The calipers of Figures 1 and 2 have two mutually pivoted legs 1 and 2, joined by an arcuate spring 3 which urges them apart. They are held together, or at a selected tip spacing, by a screw adjustment device. This comprises a screw-threaded shaft 4, pivoted at one end on a mounting 5 on the arm 1, and a knurled nut 6 which normally abuts the outside of a squat pillar 7 on the arm 2. When so abutted, it can be locked in that position by nut 8.

As best seen in Figure 2, the pillar 7 has a recess 9 open towards the tips of the legs, which snugly receives the shaft 4. This allows the latter to be swung free without disturbance of the nuts 6 and 8 while the leg tips are still in contact with the workpiece, the shaft 4 pivoting on the mounting 5 to the broken line position of Figure 1. The legs 1 and 2 will then spring apart and can easily be freed from the workpiece. The calipers are then squeezed and the shaft 4 restored to the measuring position so that the tips of the legs, when they are relaxed and held by the undisturbed nut 6 will be spaced again at the thickness of the workpiece. By holding the tips against a scale, that thickness is accurately determined.

Instead of the recess 9 facing the tips of the legs it could face in the opposite direction, towards the spring 3, and the shaft would pivot accordingly. In both cases the pivot axis is parallel to that about which the legs 1 and 2 mutually pivot. There could be a universal joint mounting for the shaft, with a recess in the free end of the pillar 7 so that the shaft could be freed by being swung up out of the plane of Figure 1. However, that is more complicated and expensive.

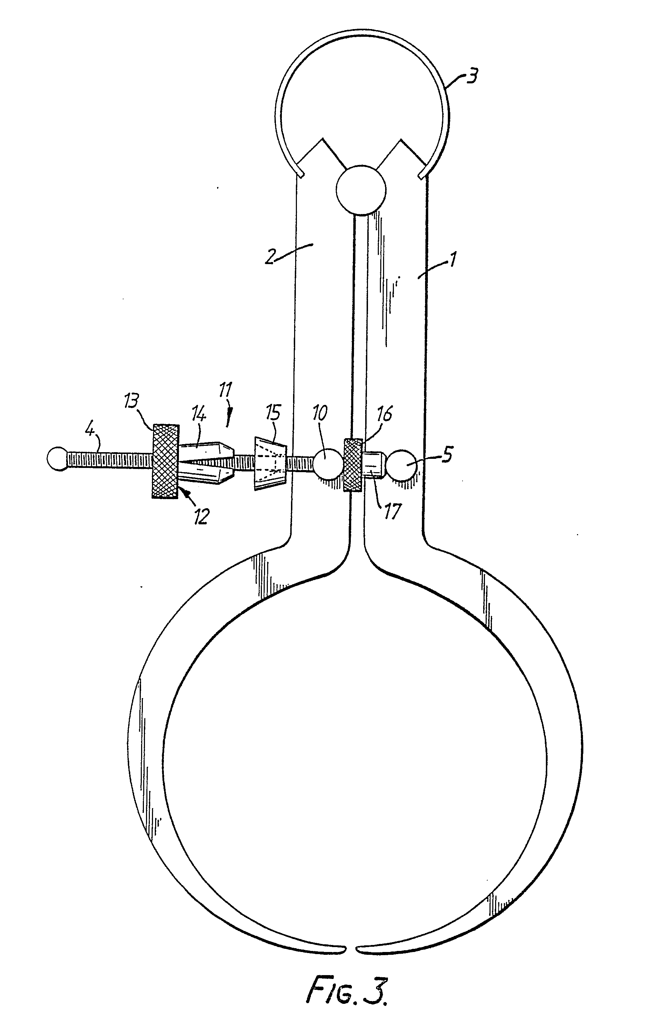

The calipers of Figure 3 are similar as far as parts 1 to 5 are concerned and the same references are used. However, the shaft 4 extends through an aperture in a modified pillar 10 on the leg 2 and so cannot be swung free.

Beyond the pillar 10 there is a nut assembly 11 on the shaft 4 including a generally mushroon shaped member 12 whose knurled head 13 is remote from the pillar 10. Its hollow stem 14 is internally threaded, and it is split so that it can spread or close up like a collet. At the end towards the pillar 10 it is coned to co-operate with a coned recess in a collar 15 which can slide freely along the shaft 4. When pressed into this, the stem 14 closes up so that the screw threading engages and the member 12 can be finely adjusted along the shaft towards the pillar 10 by normal nut action, pushing the collar 15 with it. However, when the stem 14 is released from the collar 15, it can spread to disengage the screw threading and allow the member 12 to be rapidly shifted along the shaft.

On the other side of the pillar 10, between the legs 1 and 2, the shaft carries a knurled nut 16. A sleeve 17 is disposed between this and the mounting 5 so that the legs 1 and 2 cannot close beyond the point where the tips touch. A lock nut could be provided for the nut 16 if desired.

When engaging a workpiece, the nut 16 is turned back towards the mounting 5, allowing adjustment to be freely made. When the nut assembly 11 is set, the nut 16 is turned to abut the inside of the pillar 10. The nut assembly 11 is then released and the legs spring apart to free the calipers from the workpiece. The legs can subsequently be brought together again and the nut assembly 11 rapidly done up against the pillar 10, which will be clamped against the undisturbed nut 16. Thus, the legs 1 and 2 will be in their original gauging position and the tip spacing can be measured against a scale.

There could be an alternative for the nut 16 in the form of a sleeve or collar, for example, which could slide freely along the shaft and be clamped in position by a finger-tightenable screw transverse to the shaft 4. However, using the existing thread and the nut 16 is simpler and more convenient.

While outside calipers have been described, it will be understood that similar principles can be applied to inside calipers.

## Claims

1. Calipers with mutually pivoted legs (1,2) whose tip spacing is adjustable by screw means comprising a threaded shaft (4) mounted on one leg (1) and nut means (6,8;11,16) on the shaft co-operating with an abutment (7,10) on the other leg (2), characterised in that the nut means are releasable from the abutment to allow the legs (1,2) to be freed after gauging a workpiece while leaving at least part (6,16) thereof in a set position on the shaft (4), and the legs being subsequently resettable into the gauging position by restoring co-operation between said part (6,16) and the abutment (7,10).

2. Calipers as claimed in Claim 1, characterised in that the shaft (4) is pivoted on said one leg (1)and the abutment (7) provides a detent (9) for receiving the shaft (4) and from which it can be freed, without disturbance of the nut means (6,8), by pivoting.

3. Calipers as claimed in Claim 2, characterised in that the pivot axis is generally parallel to the axis about which the legs (1,2) mutually pivot.

4. Calipers as claimed in Claim 2 or 3, characterised in that the nut means comprise a main abutment-co-operating nut (6) and a lock nut (8) therefor.

5. Calipers as claimed in Claim 1, characterised in that the nut means comprise a first, abutment-co-operating nut (16) on one side the abutment (10), and constituting said part of the nut means left in a set position, and a second, adjustment nut (11) on the other side of the abutment (10) which acts to close the abutment towards the first nut (16).

6. Calipers as claimed in Claim 5, characterised in that the second nut (11) is a quickrelease nut assembly enabling it to be slid along the shaft (4) without rotation.

7. Calipers as claimed in any preceding claim, characterised by spring means (3) to urge the leg tips away from their gauging position, the latter being held by the nut means.

FIG.1.

FIG.2.

FIG.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 403 254 (YANKUN) <br> * column 1, lines 35-55; column 2 * <br> --- | 1-7 | G 01 B   3/16 |
| A | US-A-2 261 537 (ZAMARRA) <br> * column 1, lines 40-55; column 2, lines 1-50 * <br> ----- | 4-7 | |

TECHNICAL FIELDS
SEARCHED (Int. Cl.4)

G 01 B   3/00
G 01 B   5/00

The present search report has been drawn up for all claims

| Place of search | Date of completion of the search | Examiner |
|---|---|---|
| BERLIN | 28-04-1988 | DIETRICH A. |